# EUROPEAN PATENT APPLICATION

(11) **EP 1 940 156 A2**
(43) Date of publication of application: **02.07.2008**
(21) Application number: 07024834.9
(22) Date of filing: 20.12.2007
(51) Int. Cl.: H04N 5/445, H04N 7/14

(54) **Television system with installed telephone function, and remote controller device directed thereto**

(30) Priority: 27.12.2006 JP 2006352309
(71) Applicant: Funai Electric Co., Ltd., Daito-shi, Osaka 574-0013 (JP)
(72) Inventor: Zuo, Guokun, Osaka 574-0013 (JP); Masaki, Yasuo, Osaka 574-0013 (JP); Okazaki, Akinori, Osaka 574-0013 (JP); Kokado, Masao, Osaka 574-0013 (JP); Murakami, Sadanori, Osaka 574-0013 (JP); Takeshita, Masahiro, Osaka 574-0013 (JP); Tsubota, Hirono, Osaka 574-0013 (JP)
(74) Representative: Grünecker, Kinkeldey, Stockmair & Schwanhäusser Anwaltssozietät

(57) **Abstract**

When the user takes a watching mode with respect to a television device (200), a broadcast audio signal generated at the television device (200) is transmitted to a remote controller device (250), and output from a speaker (308) of a headset (306) via a jack (J1). When the user takes a telephone mode, an incoming audio signal from a conversation party is transmitted from the television device (200) to the remote controller device (250), and output from the speaker (308) of the headset (306) via the jack (J1). Concurrently, the voice uttered by the user is converted into an outgoing audio signal at a microphone (310) of the headset (306), and transmitted to the television device (200) from the remote controller device (250) to be sent to the conversation party.

## Description

### BACKGROUND OF THE INVENTION

### Field of the Invention

The present invention relates to a television system and a remote controller device, particularly to technology directed to a television device with an internal telephone function.

### Description of the Background Art

Conventionally, many devices including a television device are configured to allow remotely controlled operation through a remote controller device. Such a remote controller device is generally configured to transmit a command corresponding to an operation made by the user by means of a radio signal through infrared radiation and the like.

A general remote controller device is often based on mono-directional transmission that allows a one-way transmission of a command to a device. However, approaches are now made to employ bidirectional transmission to allow transmission and reception of more information. For example, Japanese Patent Laying-Open No. 10-108275 discloses a configuration in which an audio reception output unit and a headphone jack are provided to output sound at a remote controller device directed to remotely controlling the main unit of a device. In accordance with this remote controller device, the user can listen at an arbitrary position, independent of the distance from the main unit of the device. In addition, Japanese Patent Laying-Open Nos. 2002-158888 and 05-076082 disclose a remote controller device having a similar configuration.

Furthermore, Japanese Patent Laying-Open No. 2005-080022 discloses a portable telephone with a TV remote control function to allow the sound of the TV to be output from the portable telephone while displaying the TV picture at the television side.

Reflecting the rapid development of the recent information and communication technology, approaches are made to interconnect various information-communication equipment including a television device and household electrical appliances through a network. A television device corresponding to such a networked environment can obtain and display various information via an external network by incorporating a browser function. Furthermore, a telephone function employing, for example, VoIP (Voice over Internet Protocol) technique can be incorporated in such a networked television device.

The aforementioned television devices with a telephone function must incorporate the component to allow conversation with the other party, i.e. a device involved in the output of the incoming voice and sound from the other party, input of the outgoing voice and sound towards the other party, and the like, which required the user to use the telephone within a predetermined distance from the television device. The inventions disclosed in the aforementioned publications do not take into consideration a television device with a telephone function. Thus, there was a problem that the usability in a telephone mode is poor by just incorporating a telephone function to a television device.

### SUMMARY OF THE INVENTION

In view of the foregoing, an object of the present invention is to provide a television system of favorable usability, and a remote controller device directed to such a television system.

According to an aspect of the present invention, a television system includes a television device, and a remote controller device for remotely operating the television device via a first radio signal. The television device includes a first transmission and reception unit to transmit and receive an audio signal with respect to the remote controller device using a second radio signal, and a telephone function unit to engage in a conversation with a conversation party. The remote controller device includes a second transmission and reception unit to transmit and receive an audio signal with respect to the first transmission and reception unit, a jack connectable with an audio input/output device having a first speaker unit to output sound according to an input audio signal and a first microphone to generate an audio signal according to an input sound, and a first audio processor electrically connected to the jack. The telephone function unit is configured to apply a first audio signal from a conversation party to the first transmission and reception unit. The first audio processor is configured to output the first audio signal, received by the second transmission and reception unit from the first transmission and reception unit, outside the device via the jack, and to provide a second audio signal input via the jack to the second transmission and reception unit. The telephone function unit is configured to send the second audio signal from the second transmission and reception unit, received by the first transmission and reception unit, to the conversation party.

Preferably, the television device further includes a broadcast receiver for receiving an externally applied broadcast signal to output a video signal and a third audio signal. The broadcast receiver is configured to provide the third audio signal to the first transmission and reception unit. The first audio processor is configured to output the third audio signal, received by the second transmission and reception unit from the first transmission and reception unit, outside the device via the jack.

Further preferably, the television device further includes a selector to select one of a watching mode and a telephone mode in response to at least one of a user's operation and an incoming call at the telephone function unit, a first switching unit in response to selection of the watching mode to disable transmission of the first audio signal from the first transmission and reception unit to the second transmission and reception unit, and a second switching unit in response to selection of the telephone mode to disable transmission of the third audio signal from the first transmission and reception unit to the second transmission and reception unit.

Preferably, the remote controller device further includes a second microphone connected to the first audio processor to generate an audio signal according to the input sound. The first audio processor is configured to determine a connection state of the audio input/output device, and when determination is made that the audio input/output device is not connected, provide the audio signal output from the second microphone to the second transmission and reception unit as the second audio signal.

Further preferably, the television device further includes a second speaker to output sound according to an input audio signal, and a second audio processor to output the first audio signal to the second speaker when the first audio processor determines that the audio input/output device takes a non-connection state.

Preferably, the television device further includes an input reflection unit to visually display an input state of an identification number of a conversation party in response to an operation on the remote controller device made by the user.

Preferably, the power consumption of the first audio signal is lower than the power consumption of the second radio signal. Preferably, the telephone function unit is configured to engage in a conversation with a conversation party using an internet protocol.

According to another aspect of the present invention, a remote controller device to remotely operate a television device via a first radio signal is provided. The television device includes a first transmission and reception unit to transmit and receive an audio signal with respect to the remote controller device using a second radio signal, and a telephone function unit to engage in a conversation with a conversation party. The telephone function unit is configured to provide the first audio signal from the conversation party to the first transmission and reception unit, and to send the second audio signal received by the first transmission and reception unit to the conversation party. The remote controller device includes a second transmission and reception unit to transmit and receive an audio signal with respect to the first transmission and reception unit, a jack connectable with an audio input/output device having a first speaker to output sound according to an input audio signal and a first microphone to generate an audio signal according to an input sound, and an audio processor provided between the jack and the second transmission and reception unit. The audio processor is configured to output the first audio signal, received by the second transmission and reception unit from the first transmission and reception unit, outside the device via the jack, and to provide the second audio signal input via the jack to the second transmission and reception unit.

According to the present invention, a television system of favorable usability, and a remote controller device directed to the television system, can be implemented.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram of an entire configuration of a television system according to an embodiment of the present invention.
Fig. 2 is a schematic diagram of a configuration of a television device.
Fig. 3 is a schematic diagram of a configuration of a remote controller device.
Figs. 4A and 4B represent a manner of usage of the television system when a "telephone mode" is selected.
Fig. 5 represents a manner of usage of the television system when a "watching mode" is selected.
Figs. 6A and 6B represent examples of a user interface display when the telephone is in use.

### DESCRIPTION OF THE PREFERRED EMBODIMENTS

Embodiments of the present invention will be described in detail hereinafter with reference to the drawings. In the drawings, the same or corresponding elements have the same reference characters allotted, and description thereof will not be repeated.

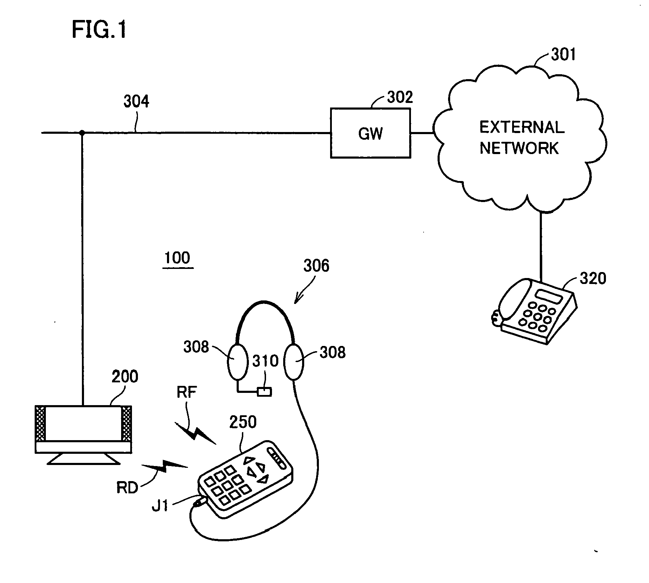

An entire configuration including a television system 100 according to an embodiment of the present invention will be described with reference to Fig. 1.

Television system 100 includes a television device 200 and a remote controller device 250.

Television device 200 is connected to a home network 304, and is configured to allow connection onto an external network 301 via a gateway (GW) 302. Home network 304 is a wired network for interconnection of respective devices to implement data transmission according to, for example, the Ethernet standard.

Television device 200 generates a video signal and a broadcast audio signal from a broadcast signal received via an antenna (not shown) or the like to display images according to the video signal on a screen thereof, and to output the broadcast audio signal from its own speaker or to transmit the broadcast audio signal to remote controller device 250 by means of a radio wave RD. The broadcast signal may be transmitted via home network 304.

Transmission of an audio signal between television device 200 and remote controller device 250 is realized according to a predetermined transmission standard. For example, a wireless LAN (Local Area Network) defined as IEEE (Institute of Electrical and Electronics Engineers, Inc.) 802.11a/b/g/n/j, for example, is employed. Such a wireless LAN is also called Wi-Fi. As an alternative to the wired LAN, Bluetooth (trademark) defined as IEEE802.15.1, or UMB defined as IEEE802.15.3a may be employed. A radio wave in the range of 2.4 GHz, 5.2 GHz, or the like is employed for such audio transmission.

Television device 200 receives a operation command according to an operation made by the user, transmitted from remote controller device 250 via infrared radiation RF to execute channel selection, volume adjustment, and the like according to the operation command.

Television device 200 particularly includes a telephone function to engage in a conversation with a conversation party. By way of example, television device 200 establishes communication with a conversation party by means of the VoIP (Voice over Internet Protocol) technique utilizing an Internet protocol. In accordance with the VoIP technique, sound associated with conversation (outgoing voice and incoming voice) is transmitted in the form of a packet. Although television device 200 has a telephone function based on the Internet protocol, the telephone set of the conversation party is not restricted to an IP telephone set. In other words, only an external network 301 is required between television device 200 and telephone set 320, and connection with a conventional telephone is allowed by providing a telephone exchange or the like on the path.

In order to allow the user to have a telephone conversation using remote controller device 250, television device 200 transmits the incoming voice from a conversation party to remote controller device 250, and sends an outgoing voice received from remote controller device 250 to the conversation party. Details will be described afterwards.

Remote controller device 250 generates an operation command according to an operation made by the user to transmit the command to television device 200 via infrared radiation RF. Transmission of an operation command by infrared radiation RF is mono-directional transmission from remote controller device 250 to television device 200.

Remote controller device 250 has a jack J1 to which a headset 306 can be connected. Jack J1 includes at least an external output path from remote controller device 250, and an input path to remote controller device 250. Remote controller device 250 outputs an audio signal received from television device 200 outside the device via jack J1, and transmits an audio signal input via jack J1 to television device 200.

Headset 306 is an example of an audio input/output device, and includes a speaker to output sound according to an input audio signal, and a microphone 310 to generate an audio signal according to input sound. Headset 306 is fitted on the user's head. Sound corresponding to the audio signal output from jack J1 is emitted from speaker 308 located near the user's ear or in the neighborhood thereof. Microphone 310 located near the user's mouth or in the neighborhood thereof generates an audio signal from the user's voice to provide the generated audio signal to jack J1.

In the present embodiment, the user can listen to the broadcast sound at a location remote from television device 200 by means of remote controller device 250 and headset 306 connected thereto, and have a conversation with another party using the telephone function of television device 200.

In detail, when in a watching mode of television device 200, the broadcast audio signal generated at television device 200 is transmitted to remote controller device 250 to be output from speaker 308 of headset 306 via jack J1.

When in a telephone mode, the incoming audio signal from the conversation party is transmitted from television device 200 to remote controller device 250, and output from speaker 308 of headset 306 via jack J1. Concurrently, the user's voice is converted into an outgoing audio signal at microphone 310 of headset 306 to be transmitted from remote controller device 250 to television device 200, and then to the conversation party.

A configuration of television device 200 and remote controller device 250 to realize the operation set forth above will be described in further detail hereinafter.

### [Configuration of Television Device 200]

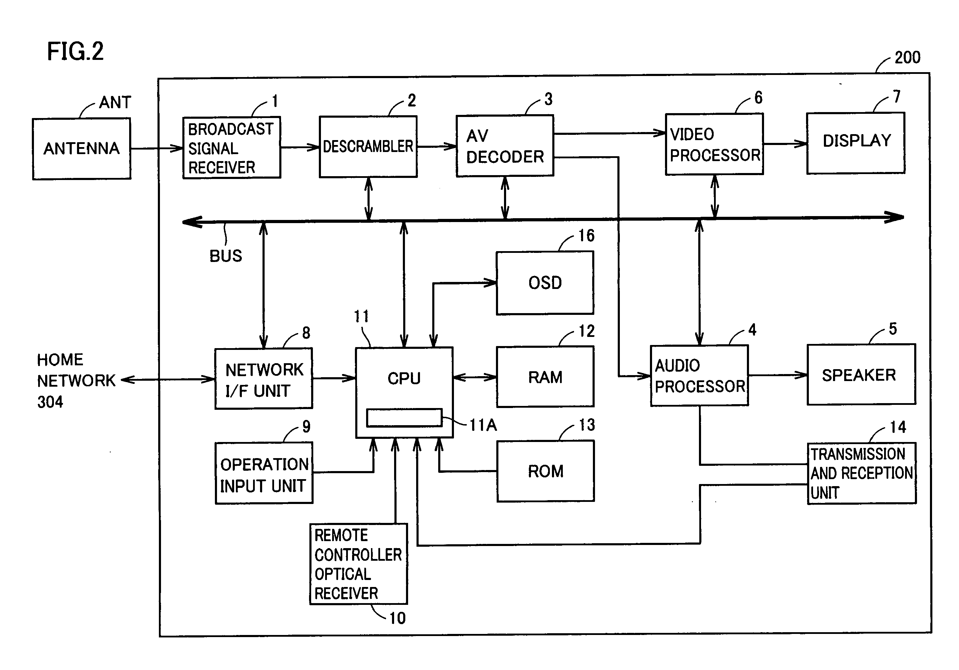

Referring to Fig. 2, television device 200 includes a broadcast signal receiver 1, a descrambler 2, an AV (Audio Visual) decoder 3, an audio processor 4, a speaker 5, a video processor 6, a display 7, a network interface (IF) unit, an operation input unit 9, remote controller optical receiver 10, a CPU (Central Processing Unit) 11, a RAM (Random Access Memory) 12, a ROM (Read Only Memory) 13, a transmission and reception unit 14, and an OSD (On Screen Display) unit 16.

Broadcast signal receiver 1 extracts a signal corresponding to a selected channel from the broadcast signal received via antenna ANT, and provides to descrambler 2 a signal (for example, intermediate frequency signal) having the carrier wave removed from the extracted signal.

Descrambler 2 applies a descrambling process and/or decoding process on the scrambled digital signal from broadcast signal receiver 1. The processed signal is provided to AV decoder 3. In the case where an analog signal is input from broadcast signal receiver 1, descrambler 2 can directly provide the signal to AV decoder 3 without any processing thereon.

AV decoder 3 generates a video signal and a broadcast audio signal based on the signal output from descrambler 2. AV decoder 3 outputs the generated video signal to video processor 6, and the generated broadcast audio signal to audio processor 4.

Audio processor 4 receives the broadcast audio signal from AV decoder 3, and obtains an incoming audio signal from a conversation party via CPU 11 that will be described afterwards. Audio processor 4 responds to a command from CPU 11 to selectively amplify at least one of the broadcast audio signal and incoming audio signal for output to speaker 5.

Speaker 5 is arranged, for example, at both side surfaces of television device 200 to generate sound according to the amplified signal from audio processor 4. Specifically, speaker 5 is formed including a diaphragm (for example, paper corn) that vibrates according to an audio signal applied from audio processor 4, and generates sound by aerial vibration caused by vibration of the diaphragm.

Video processor 6 drives display 7 such that video according to the video signal from AV decoder 3 is displayed. Specifically, video processor 6 sequentially outputs color information of each pixel in synchronization with a predetermined scanning clock.

Display 7 is a unit to display video, and is formed of a liquid crystal display (LCD), plasma display, or project type display.

Network interface unit 8 is connected to home network 304 to receive and provide to CPU 11 or a bus BUS a data packet on home network 304, and to send the data applied from CPU 11 or bus BUS to home network 304.

Operation input unit 9 is formed of a key button and the like, provided at the surface of the main body of television device 200 to provide a command according to an operation made by the user to CPU 11.

Remote controller optical receiver 10 receives infrared radiation RF transmitted from remote controller device 250, which is decoded into an operation command for output to CPU 11.

CPU 11 is a control device responsive to a command from operation input unit 9 or remote controller optical receiver 10 to control respective elements constituting television device 200. CPU 11 implements an IP telephone function unit 11A by execution of a program prestored in ROM 13 and the like.

IP telephone function unit 11A executes a calling process to a conversation party according to an operation made by the user, or an incoming call process from a conversation party to establish line connection with the conversation party. IP telephone function unit 11A transmits an incoming audio signal received from the conversation party to audio processor 4 via bus BUS, and sends an outgoing audio signal from transmission and reception unit 14 to the conversation party.

RAM 12 is connected to CPU 11, and functions as a work memory to store temporary data and the like that is generated during a process executed by CPU 11.

ROM 13 has a program that is to be executed by CPU 11 stored in advance, and is read out by CPU 11 when television device 200 is activated.

Transmission and reception unit 14 functions to transmit and receive an audio signal to/from remote controller device 250 (Fig. 1). Transmission and reception unit 14 transmits a radio wave that is modulated from the audio signal received from audio processor 4, and demodulates the radio wave received from remote controller device 250 to an audio signal for transmission to CPU 11. Transmission and reception unit 14 may be incorporated in television device 200, or configured to allow a unit corresponding to transmission and reception unit 14 to be externally provided, as necessary.

OSD unit 16 responds to a control command from CPU 11 to generate video data to display a user interface screen on display 7. The video data is provided to video processor 6 via CPU 11.

In particular, CPU 11 according to an embodiment of the present invention responds to a user operation applied through operation input unit 9 or remote controller optical receiver 10, or responds to occurrence of an incoming call process by IP telephone function unit 11A to select either "watching mode" or "telephone mode".

When in a "watching mode" selected state, CPU 11 cuts off the output of a incoming audio signal from IP telephone function unit 11A to audio processor 4 to disable transmission from television device 200 to remote controller device 250. In a "watching mode", only the broadcast audio signal from audio processor 4 is output.

When in a "telephone mode" selected state, CPU 11 provides a control command to audio processor 4 to cut off the output of a broadcast audio signal from audio processor 4 to disable transmission from television device 200 to remote controller device 250. In a telephone mode, only an incoming audio signal from audio processor 4 is output.

By the process set forth above, mixture of broadcast audio into the incoming sound during conversation can be prevented. A conversation can be made appropriately even if a telephone call is received when the user is watching television.

### [Configuration of Remote Controller Device 250]

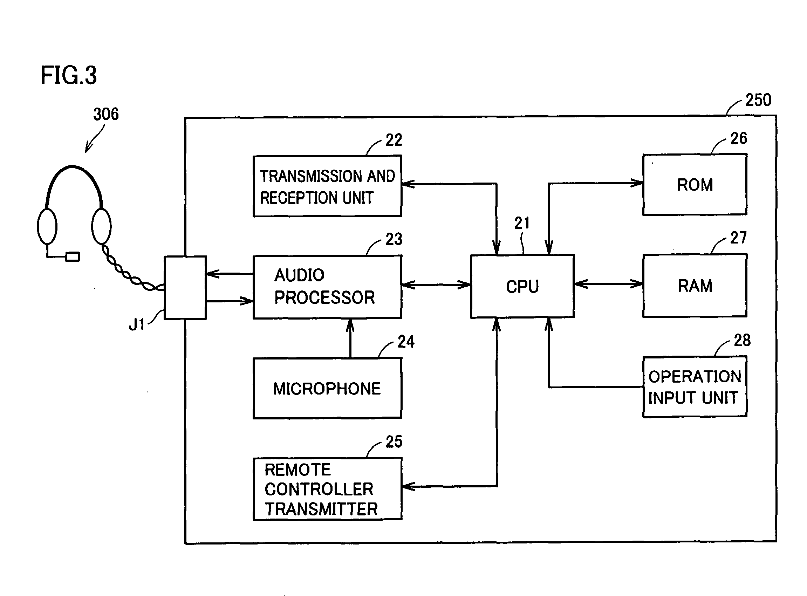

Referring to Fig. 3, remote controller device 250 includes a CPU 21, a transmission and reception unit 22, an audio processor 23, a microphone 24, a remote controller transmitter 25, a ROM 26, a RAM 27, an operation input unit 28, and a jack J1.

CPU 21 is a control device to control respective elements constituting remote controller device 250. Transmission and reception unit 22 serves to transmit/receive an audio signal to/from television device 200 (Fig. 1), and transmits a radio wave that is modulated from an audio signal received from audio processor 4 via CPU 21, and demodulate a radio wave received from television device 200 to an audio signal for transmission to audio processor 23 via CPU 21.

Audio processor 23 is connected to jack J1 and CPU 21, and responds to a control command from CPU 21 to convert a digitized audio signal received at transmission and reception unit 22 to an analog audio signal for output via jack J1. Audio processor 23 also digitizes an analog audio signal input from headset 306 via jack J1 for output to transmission and reception unit 22. Alternatively, audio processor 23 may digitize an analog audio signal applied from microphone 24 of remote controller device 250 for output to transmission and reception unit 22.

Audio processor 23 determines whether headset 306 is connected to jack J1 or not based on an output audio signal towards jack J1 or an input audio signal from jack J1. For example, audio processor 23 determines whether headset 306 is in a connection state or non-connection state based on the level of the current value (or impedance value) of the output audio signal.

Microphone 24 is disposed at the surface area or the like of remote controller device 250 to collect the user's voice or sound to generate an audio signal according to the collected sound. Microphone 24 provides the generated audio signal to audio processor 23.

In response to receiving an operation command via CPU 21 from operation input unit 28 caused by an operation made by the user, remote controller transmitter 25 emits modulated infrared radiation RF according to the operation command. Infrared radiation RF has low power consumption as compared to a radio wave corresponding to transmission/reception of an audio signal, and is emitted only when an operation is made by the user.

A program or the like executed at CPU 21 is prestored in ROM 26, and read out by CPU 22 when remote controller device 250 is activated.

RAM 27 is connected to CPU 21, and functions as a work memory in which temporary data generated during the process executed at CPU 21 is stored.

Operation input unit 28 functions as a user interface that accepts an operation made by the user, and is provided at the surface region of the body of remote controller device 250. By way of example, operation input unit 28 is formed of a key button and the like.

### [Manner of Usage]

A usage manner of television system 100 according to an embodiment of the present invention will be described in detail hereinafter.

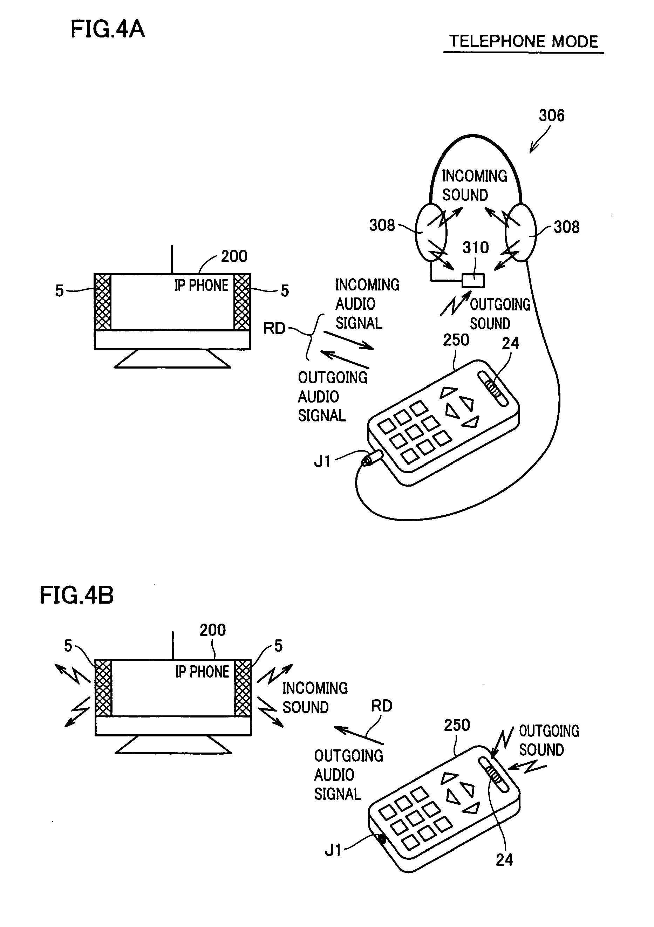

Fig. 4A represents the state where headset 306 is connected to remote controller device 250. Fig. 4B represents the state where headset 306 is not connected to remote controller device 250.

When the user connects headset 306 to remote controller device 250, as shown in Fig. 4A, audio processor 23 (Fig. 3) of remote controller device 250 determines that headset 306 is connected, and provides the determination result to CPU 21 (Fig. 3). In response to the result of determination, CPU 21 provides the incoming audio signal, received at transmission and reception unit 22 (Fig. 3) from television device 200, to audio processor 23. Audio processor 23 provides the incoming audio signal to headset 306 via jack J1. Then, the incoming sound is output from speaker 308.

The voice of the user is converted into an incoming audio signal at microphone 301 of headset 306 to be provided to remote controller device 250 via jack J1. The relevant incoming audio signal is provided from audio processor 23 to transmission and reception unit 22 (Fig. 3) via CPU 21 to be transmitted to television device 200.

Radio wave RD includes the incoming audio signal transmitted from television device 200 to remote controller device 250, and the outgoing audio signal transmitted from remote controller device 250 to television device 200.

When the user detaches headset 306 from remote controller device 250, as shown in Fig. 4B, audio processor 23 (Fig. 3) of remote controller device 250 determines that headset 306 is not connected, and provides this determination result to CPU 21 (Fig. 3). In response to the determination result, CPU 21 transmits a notification of a non-connection state to television device 200 via transmission and reception unit 22 (Fig. 3). In response, CPU 11 (Fig. 2) of television device 200 provides a control command to audio processor 4 (Fig. 2) to cause the incoming sound to be output from speaker 5 of television device 200.

The voice of the user is converted into an incoming audio signal at microphone 310 of headset 306 to be provided to remote controller device 250 via jack J1. The relevant incoming audio signal is provided to transmission and reception unit 22 (Fig. 3) via CPU 21 from audio processor 23 of remote controller device 250 to be transmitted to television device 200.

Radio wave RD includes the outgoing audio signal transmitted from remote controller device 250 to television device 200.

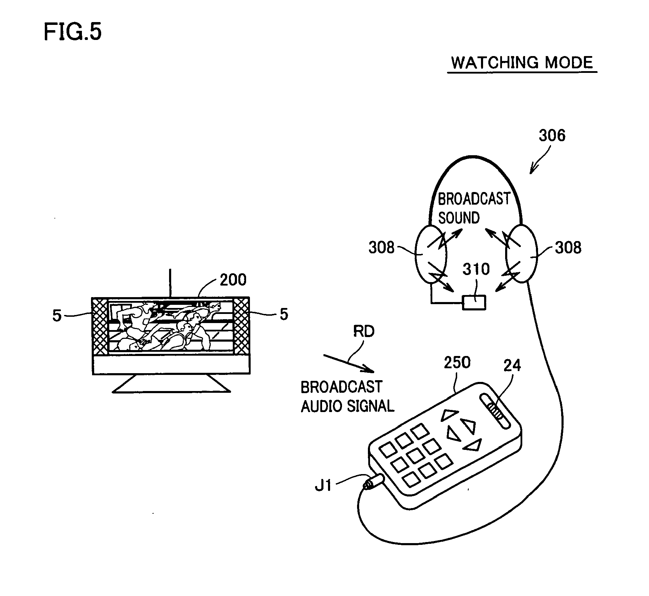

Referring to Fig. 5, when the user operates remote controller device 250 to select the watching mode, television device 200 responds to this selection signal to generate a video signal and broadcast audio signal from the broadcast signal corresponding to the selected channel. Television device 200 displays video corresponding to the generated video signal on its screen, and transmits the broadcast audio signal to remote controller device 250 by means of radio wave RD. Audio processor 23 (Fig. 3) of remote controller device 250 provides the broadcast audio signal to headset 306 via jack J1. Then, the broadcast sound is output from speaker 308.

Radio wave RD includes the broadcast audio signal transmitted from television device 200 to remote controller device 250.

### [User Interface]

An example of the user interface in a telephone usage mode at television system 100 according to an embodiment of the present invention will be described hereinafter.

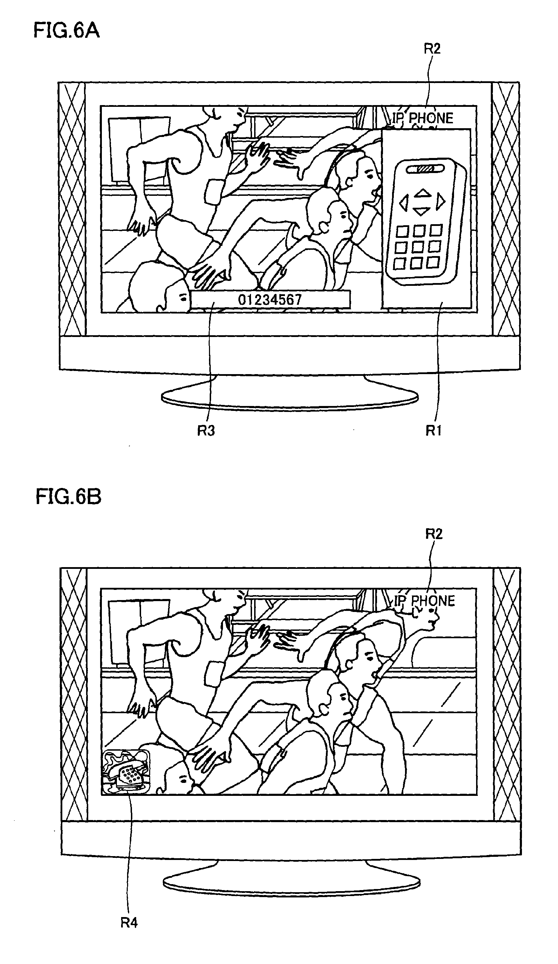

Fig. 6A represents an example of the user interface display during a dialing operation. Fig. 6B represents an example of the user interface display when in a conversation mode.

Referring to Fig. 6A, when the user operates remote controller device 250 to select the telephone mode, CPU 11 (Fig. 2) of television device 200 provides a control command to OSD unit 16 (Fig. 2). OSD unit 16 provides to video processor 6 (Fig. 2) the video data to display a picture of remote controller device 250. In the case where the watching mode has been selected right up until the current selection of this telephone mode, video processor 6 provides the video data from OSD unit 16 in an overlapping manner on the image received in the watching mode for display 7. As a result, a screen display R1 indicating a dial input acceptance state from remote controller device 250 is displayed, overlapping on the picture of the displayed channel. In response to an operation command transmitted from remote controller device 250, a display to allow confirmation of the operation made by the user can be provided at screen display R1. For example, a dynamic display of a corresponding button being depressed or changing the display color of the corresponding button can be provided at screen display R1. In addition, a text display R2 such as "IP telephone" indicating that a telephone mode has been selected may be displayed.

When the user operates remote controller device 250 to enter the telephone number or the like of the conversation party, an input number display R3 representing the entered number in time series is provided. When the user depresses the calling button (not shown) on remote controller device 250 after entering a telephone number, the number train displayed at input number display R3 will appear in a blinking manner to notify the user that a calling process is being executed.

When a line connection is established with the conversation party following the calling process, an icon R4 indicating that a conversation mode is currently effected is displayed, as shown in Fig. 6B. When the conversation ends, icon R4 disappears, and the screen returns to a picture display of a watching mode.

As to the relationship between the present embodiment set forth above and the definition in the claims, CPU 11 corresponds to "control unit", broadcast signal reception unit 1 corresponds to "broadcast reception unit", IP telephone function unit 11A corresponds to "IP telephone function unit", transmission and reception unit 14 corresponds to "first transmission and reception unit", headset 102 correspond to "audio input/output device", transmission and reception unit 22 corresponds to "second transmission and reception unit", and audio processor 23 corresponds to "audio processor".

According to an embodiment of the present invention, when the user is in a telephone usage mode, the incoming sound received at television device 200 is transmitted to remote controller device 250 via a radio wave, and sound is output towards the user from speaker 308 of headset 306 connected to remote controller device 250. Concurrently, the outgoing voice issued by the user is transmitted to television device 200 from remote controller device 250 via a radio signal and is sent to the conversation party. Therefore, the user can use the telephone at an arbitrary position within a range of distance that allows radio wave reception between television device 200 and remote controller device 250. The user can select a channel of television device 200 by means of remote controller device 250, and also listen to the broadcast sound from television device 200 by the same headset 306. By carrying remote controller device 250, the user can watch a television broadcast and have a telephone conversation at an arbitrary position. Therefore, a television system of favorable usability can be implemented.

According to an embodiment of the present invention, an arbitrary headset can be attached to remote controller device 250. Therefore, the user can select and use an optimum headset from the standpoints of sound quality, weight, design, fitting, and the like, corresponding to the manner of usage. Thus, the versatility is high.

According to an embodiment of the present invention, an operation command is transmitted from remote controller device 250 via infrared radiation RF while an audio signal is transmitted via radio wave RD. Therefore, infrared radiation RF that is lower in power consumption is emitted when the remote controller device is used based on only the conventional function, i.e. when headset 306 connected to remote controller device 250 is not used. Therefore, power consumption at remote controller device 250 can be suppressed. Accordingly, the number of batteries or the like to be loaded in remote controller device 250 can be reduced to allow reduction in size and weight.

Although the present invention has been described and illustrated in detail, it is clearly understood that the same is by way of illustration and example only and is not to be taken by way of limitation, the scope of the present invention being interpreted by the terms of the appended claims.

## Claims

1. A television system (100) comprising:
a television device (200), and
a remote controller device (250) to remotely operate said television system (200) via a first radio signal (RF),
wherein said television device (200) comprises
a first transmission and reception unit (14) to transmit and receive an audio signal with respect to said remote controller device (250), using a second radio signal (RD), and
a telephone function unit (11A) to engage in a conversation with a conversation party,
wherein said remote controller device (250) comprises
a second transmission and reception unit (22) to transmit and receive an audio signal with respect to said first transmission and reception unit (14),
a jack (J1) connectable with an audio input/output device (306) including a first speaker (308) to output sound according to an input audio signal and a first microphone (310) to generate an audio signal according to an input sound, and
a first audio processor (23) electrically connected to said jack (J1), wherein
said telephone function unit (11A) is configured to provide a first audio signal from said conversation party to said first transmission and reception unit (14),
said first audio processor (23) is configured to output said first audio signal, received by said second transmission and reception unit (22) from said first transmission and reception unit (14), outside the device via said jack (J1), and to provide a second audio signal input via said jack (J1) to said second transmission and reception unit (22), and
said telephone function unit (11A) is further configured to send said second audio signal, received by said first transmission and reception unit (14) from said second transmission and reception unit (22), to said conversation party.

2. The television system according to claim 1, wherein said television device (200) further comprises a broadcast receiver (1) receiving an externally applied broadcast signal to output a video signal and a third audio signal, wherein
said broadcast receiver (1) is configured to provide said third audio signal to said first transmission and reception unit (14), and
said first audio processor (23) is further configured to output said third audio signal, received by said second transmission and reception unit (22) from said first transmission and reception unit (14), outside the device via said jack (J1).

3. The television system according to claim 2, wherein said television device (200) further comprises
a selector (11) to select one of a watching mode and a telephone mode in response to at least one of a user operation and an incoming call at said telephone function unit (11A),
a first switching unit (11) to disable transmission of said first audio signal from said first transmission and reception unit (14) to said second transmission and reception unit (22) when said watching mode is selected, and
a second switching unit (11) to disable transmission of said third audio signal from said first transmission and reception unit (14) to said second transmission and reception unit (22) when said telephone mode is selected.

4. The television system according to claim 1, wherein said remote controller device (250) further comprises a second microphone (24) connected to said first audio processor (23) to generate an audio signal according to input sound,
wherein said first audio processor (23) is configured to determine a connection state of said audio input/output device (306), and when determination is made of a non-connection state of said input/output device (306), to provide the audio signal output from said second microphone (24) to said second transmission and reception unit (22) as said second audio signal.

5. The television system according to claim 4, wherein said television device (200) further comprises
a second speaker (5) to output sound according to an input audio signal, and
a second audio processor (4) to output said first audio signal to said second speaker (5) when said first audio processor (23) determines that said audio input/output device (306) takes a non-connection state.

6. The television system according to claim 1, wherein said television device (200) further comprises an input reflection unit (16) in response to an operation on said remote controller device (250) made by a user to visually display an input state of an identification number of said conversation party.

7. The television system according to claim 1, wherein power consumption of said first radio signal (RF) is lower than the power consumption of said second radio signal (RD).

8. The television system according to claim 1, wherein said telephone function unit (11A) is configured to engage in a conversation with said conversation party taking advantage of an internet protocol.

9. A remote controller device (250) for remotely operating a television device (200) via a first radio signal (RF), said television device (200) including a first transmission and reception unit (14) to transmit and receive an audio signal with respect to said remote controller device (250), using a second radio signal (RD), and a telephone function unit (11A) to engage in a conversation with a conversation party, said telephone function unit (11A) being configured to provide a first audio signal from said conversation party to said first transmission and reception unit (14), and to send a second audio signal received by said first transmission and reception unit (14) to said conversation party,
said remote controller device (250) comprising:
a second transmission and reception unit (22) to transmit and receive an audio signal with respect to said first transmission and reception unit (14),
a jack (J1) connectable with an audio input/output device (306) including a first speaker (308) to output sound according to an input audio signal and a first microphone (310) to generate an audio signal according to an input sound, and
an audio processor (23) provided between said jack (J1) and said second transmission and reception unit (22),
wherein said audio processor (23) is configured to output said first audio signal, received by said second transmission and reception unit (22) from said first transmission and reception unit (14), outside the device via said jack (J1), and to provide said second audio signal input via said jack (J1) to said second transmission and reception unit (22).
